# EUROPEAN PATENT SPECIFICATION

(11) **EP 1 747 827 B1**
(45) Date of publication and mention of the grant of the patent: **16.01.2013**
(21) Application number: 05425566.6
(22) Date of filing: 29.07.2005
(51) Int. Cl.: B21D 53/26, F16H 55/44

(54) **Method for the construction of a pulley for automotive purpose equipped with a plurality of v-shaped races**
Verfahren zum Herstellen einer Riemenscheibe für Kraftfahrzeuge mit einer Mehrzahl von V-förmigen Nuten
Méthode pour la construction d'une poulie pour véhicules automobiles équipée d'une pluralité de rainures en forme de V

(43) Date of publication of application: 31.01.2007
(73) Proprietor: Agla Power Transmission S.p.a., Avigliana (TO) (IT)
(72) Inventor: Bonu', Oscar, 10051 Avigliana (IT)
(74) Representative: D'Angelo, Fabio

(56) References cited:
- EP-A- 0 552 776
- JP-A- 61 144 467
- PATENT ABSTRACTS OF JAPAN vol. 010, no. 346 (M-537), 21 November 1986 (1986-11-21) & JP 61 144467 A (AICHI MACH IND CO LTD; others: 01), 2 July 1986 (1986-07-02)

## Description

The present invention relates to an improved method for the construction of a pulley for automotive purposes equipped with a plurality of V-shaped races.

It is known in the automotive sector to make the transmission of motion from a drive unit, for example a crankshaft, to a plurality of accessory units by the use of a first pulley driven by the crankshaft, of a second pulley dragging an accessory unit, and a driving belt dragged by the first pulley and dragging the second pulley.

Each pulley presents a plurality of V-shaped races adapted to couple with respective trapezoidal pads carried by the driving belt, and may present, with particular reference to the first pulley, an annular peripheral projection, which defines a seismic mass adapted to limit the transmission of vibrations from the crankshaft to the accessory unit.

In the sector, it is particularly felt the need to limit the wear of the driving belt in order to increase its duration. For this purpose, the surfaces of the races in contact with the belt must be made with a high surface precision.

The pulleys are generally obtained by a process comprising first a fusion machining of a tubular member, and secondly a broaching machining in order to define, on a peripheral edge of said tubular member, the peripheral projection and the V-shaped races.

The above method, while permitting the construction of races having a high surface precision, uses the material in a sub-optimal manner, since a considerable part of it is lost during the broaching machining. Given the cost of such material, such waste is particularly expensive.

JP-A-61144467 discloses a method for the construction of a pulley, according to the preamble of claim 1.

The object of the present invention is the arrangement of a method of construction of a pulley for automotive purposes, equipped with a plurality of V-shaped races, which will make it possible to guarantee high surface precisions of said races, at the same time avoiding wastes of materials.

The above object is achieved by a method for the construction of a pulley for automotive purposes equipped with a plurality of V-shaped races, as defined in claim 1.

For a better understanding of the present invention, it is described below a preferred embodiment, by way of pure non-limitative example and with reference to the accompanying drawings in which:
- figure 1 is a view in axial section of a pulley made using a method according to the present invention;
- figure 2 is a view in enlarged scale and in axial section of an initial semimachined piece for the construction of the pulley in figure 1;
- figure 3 is an axial half-section of the semimachined piece in figure 2 as mounted on a roll forming unit; and
- figures 4 to 7 show successive operations of machining the semimachined piece from figure 2 according to the subject method of the invention.

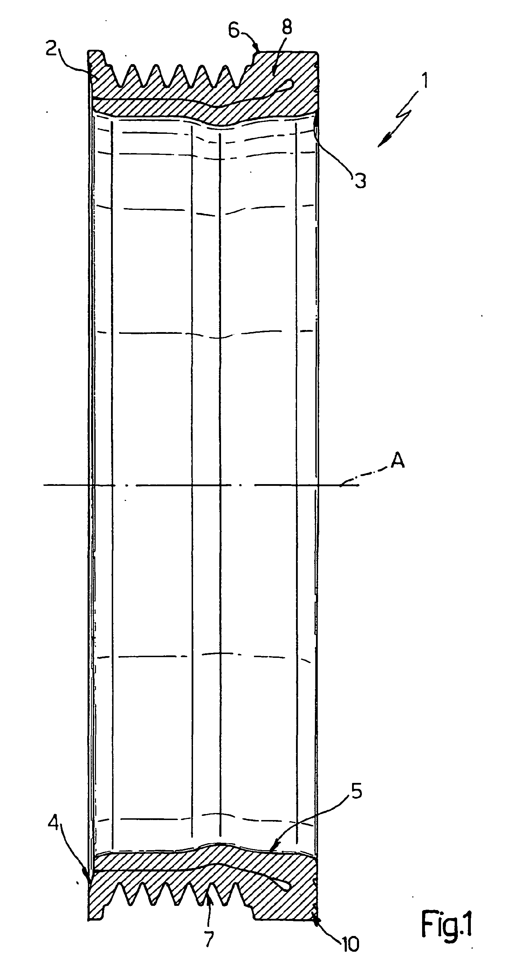

With reference to figure 1, it is indicated by 1 a pulley for automotive purposes obtained by the method according to the present invention.

In the description that follows, the pulley 1, for simplicity and without loss of general reference, receives the motion from a drive unit, not illustrated, and is adapted to drag in rotation, by means of a belt, not illustrated, coupled with the pulley 1 itself, an accessory group also not illustrated.

The pulley 1 essentially includes a tubular body 2 extending along an axis A and presenting opposing axial, circular-shaped apertures 3, 4.

The body 2 is further defined, in a radial direction, by an internal surface 5 having corrugated conformation and adapted to be linked at an angle to the drive unit, and by an external surface 6, on which a plurality of races 7 are machined, in this case illustrated as six in number, shaped as a 'V' and adapted to couple with respective trapezoidal projections carried by a belt, not illustrated.

The surface 6 further comprises an annular and flat projection 8, which is adapted to define a seismic mass to reduce the magnitude of the vibrations transmitted to the belt and to the accessory group.

More precisely, the projection 8 extends from an axial end 10 of the surface 6 corresponding to the aperture 3 and is linked to the race 7 principally in proximity with the end 10 itself.

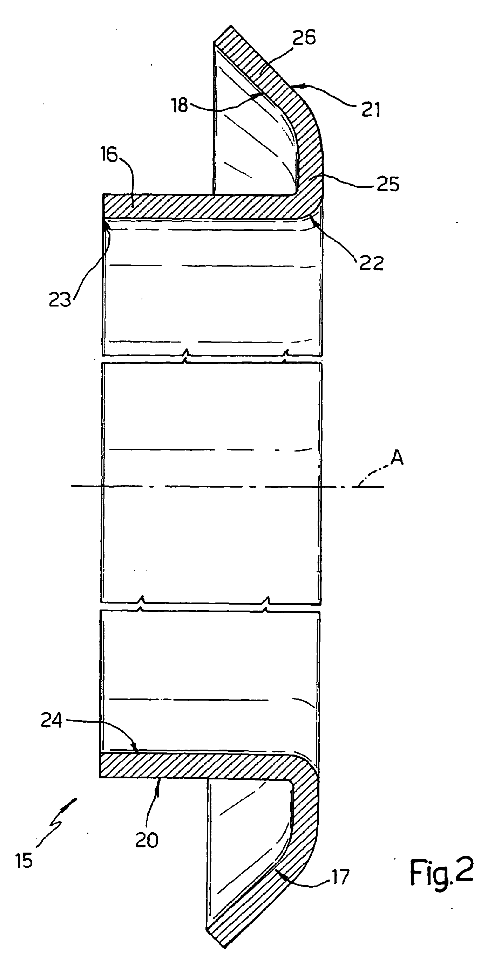

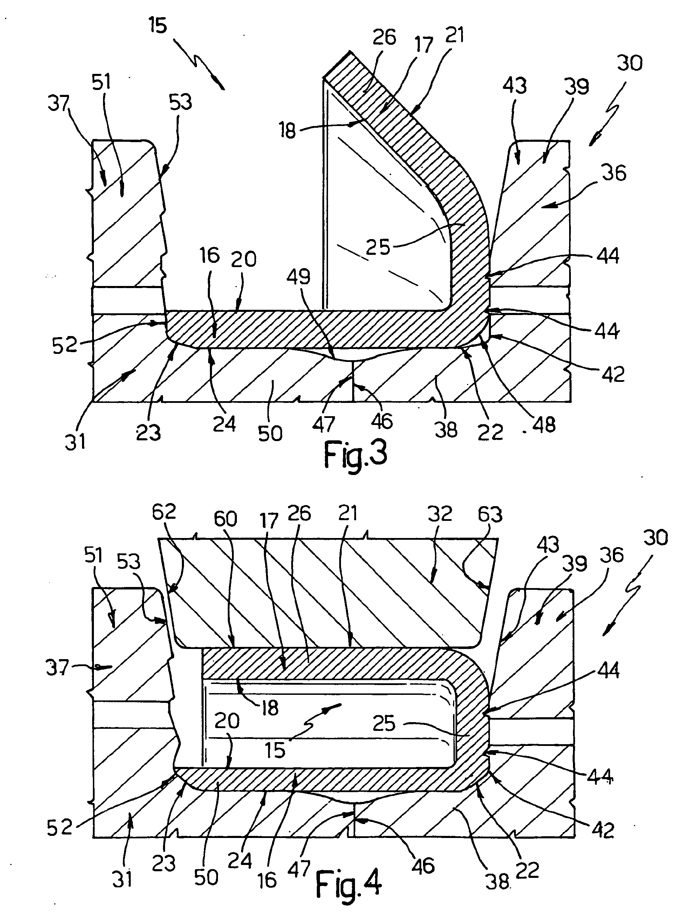

Advantageously, the pulley 1 is obtained by a method comprising the seteps of:
- constructing a tubular semimachined piece 15 (figures 2 and 3) with axis A comprising a substantially cylindrical body 16 and an external annular end flange 17 partially folded towards the body 16; and
- plastically deforming (figures 4 to 7) the flange 17 to bring it, with a peripheral surface 18 of it, into contact with an external surface 20 of the body 16 and to make the races 7 on a second surface 21 opposite to the flange 17.

The semimachined piece 15 further presents, at its reciprocally opposing axial ends, respective apertures 22 and 23, which are circular-shaped and coincide, when deformation is complete, respectively with the aperture 3 and the aperture 4 of the pulley 1.

The body 16 is radially defined by the surface 20 and by a surface 24 opposite to the surface 20 and having cylindrical configuration.

The flange 17 extends cantilevered from the axial end of the body 16 placed on the side of the aperture 22.

The flange 17 further includes a radial length 25 originating from the body 16 and an end length 26, which is folded away from the body 16 in order to diverge from it and extends obliquely with respect to the length 25.

The step of plastic deformation is carried out by a rolling unit 30 (illustrated in figures from 3 to 7), which includes a tool 31 for blocking/moving the semimachined piece 15 and a plurality of rollers, in the case in point illustrated as four in number and indicated by 32, 33, 34, 35, adapted to plastically deform the semimachined piece 15 according to a predetermined operational sequence.

More precisely, the tool 31 is adapted to block the semimachined piece 15 in a predetermined radial and axial position, and to drag it angularly in rotation with respect to the axis A. The rollers 32, 33, 34, 35 are activated, one at a time and sequentially, in a radial direction towards the semimachined piece 15 so as to plastically deform, following the rotation of the semimachined piece 15 itself, the entire surface 21.

The tool 31 includes a pair of members 36, 37, which press, from axially opposing parts, the flange 17 and the body 16. The members 36, 37 further present respective surfaces 46, 47 of axial end, which are fitted inside the semimachined piece 15 and are pressed together.

In greater detail, the member 36 is coaxially arranged to the semimachined piece 15; the member 36 further includes an axial portion 38, which is partially fitted, through the aperture 22, inside the semimachined piece 15, and a flange 39 extending cantilevered from the portion 38 and adapted to exert a compressive action on the flange 17.

More precisely, the portion 38 defines, at its own axial end fitted inside the semimachined piece 15, the surface 46, which presents a flat configuration and a radial development. The portion 38 further presents an external surface calibrated in order to cooperate with a portion of the surface 24 adjacent to the aperture 22.

The flange 39 presents a length 42, having a radial profile and extending from the portion 38, and an end length 43 having an inclined profile on the opposite side to the semimachined piece 15 so as not to interfere, during a rolling step, with the rollers 32, 33, 34, 35.

The length 42 presents a pair of teeth 44 axially protruding towards the flange 17, and engaged, in blocking conditions, on the flange 17 itself in order to hold the latter in the desired position.

In particular, the length 42, the portion 38 and the body 16 define, at a union zone between the flange 17 and the body 16 adjacent to the aperture 22, an annular chamber 48 adapted to be filled with material during the rolling of the semimachined piece 15.

Similarly to the member 36, the member 37 is coaxially arranged to the semimachined piece 15; the member 37 further comprises an axial portion 50, which is partially fitted, through the aperture 23, into the semimachined piece 15 to press the member 36, and a flange 51 extending cantilevered from portion 50 and adapted to exert a compressive action on the body 16.

More precisely, the portion 50 defines, at its axial end fitted inside the semimachined piece 15, the surface 47, which presents a flat configuration and a radial development. The portion 50 further presents a calibrated external surface in order to cooperate with a portion of the surface 24 adjacent to the aperture 23.

In particular, the portion 38, the portion 50 and the surface 24 define, at the surfaces 46 and 47, an annular chamber 49 adapted to be filled with material during the subsequent plastic deformations of the semimachined piece 15.

The flange 51 presents an inclined conformation with respect to the portion 50 on the opposite side to the semimachined piece 15.

More precisely, the flange 51 comprises a length 52 originating from the body 16 and adapted to exert a pressure action on the body 16 itself, and a stepped length 53 shaped so as not to interfere, in a rolling step, with rollers 32, 33, 34, 35.

With reference to figure 4, a first rolling of the semimachined piece 15 is illustrated, during which the roller 32 plastically deforms the length 26 in order to bring the latter in an axial and parallel configuration to the body 16.

In particular, during the first rolling, the deformed material of the semimachined piece 15 fills the chambers 48 and 49.

The roller 32 presents an axial working profile 60 adapted to cooperate with the surface 21, and two head surfaces 62, 63, oblique with respect to the profile 60 and having a converging extension towards the profile 60 itself. More precisely, the surfaces 62 and 63 respectively face, during feeding of the roller 32, length 53 and length 43 of the members 36 and 37.

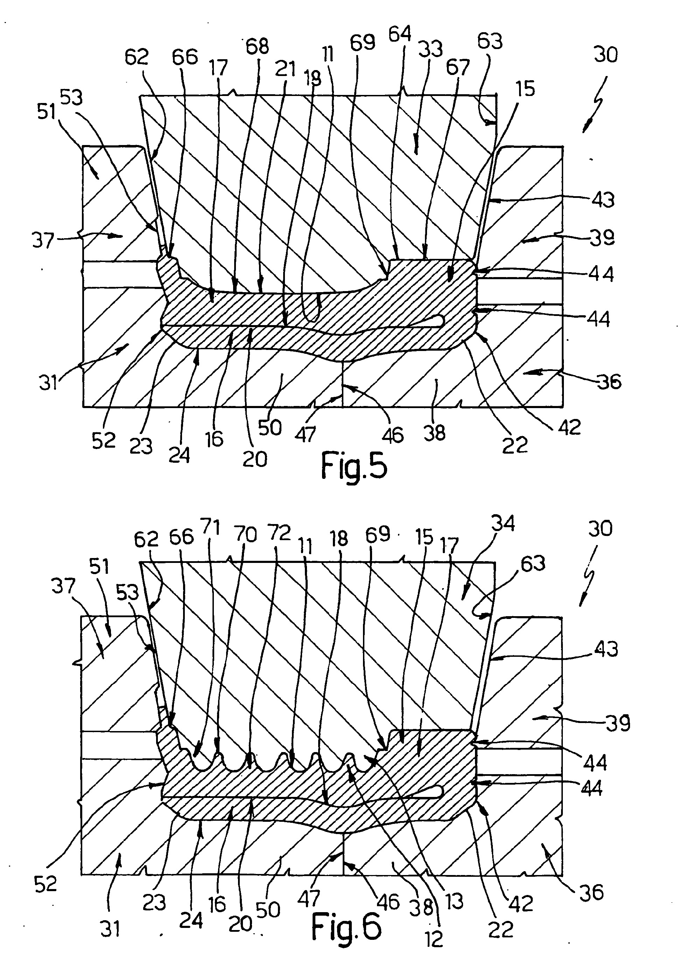

With reference to figure 5, a second rolling of the semimachined piece 15 is illustrated, during which the length 26 of the flange 17 is plastically deformed, by the roller 33, so as to overlap the surface 18 of the flange 17 on the surface 20 of the body 16 and define the projection 8.

The roller 33 is similar to the roller 32 and is described only where it differs from the roller 32 itself; in particular, the roller 33 includes a working profile 64, which presents, proceeding from the surface 62 to the surface 63, a stepped section 66 with increasing diameter, an axial length 68, a stepped length 69 with decreasing diameter, and an axial length 67. Therefore, the length 68 projects from the roller 33 with respect to the length 67 in the direction of the semimachined piece 15.

Consequently, the action of the roller 33 plastically deforms the length 26 so as to define, on the length 26 itself, the projection 8 having a configuration corresponding to length 67, and a length 11 radially less bulky and having a configuration corresponding to the length 68.

With reference to figure 6, a third rolling of the semimachined piece 15 is illustrated, during which the roller 34 deforms the surface 21 of the flange 17 so as to create on the length 11 an alternating plurality of cavities 12 and solids 13 having a corrugated configuration.

The roller 34 is similar to the roller 33 and is described only where it differs from the roller 33 itself; in particular, the roller 33 presents in a position corresponding to the length 68 of the roller 33, a section 70 presenting an alternating plurality of projections 71 with a corrugated profile and spaces 72 also having a corrugated profile.

Consequently, the action of the roller 34 plastically deforms the surface 21 so as to create the cavities 12 and the solids 13 having a corrugated configuration corresponding respectively to the configuration of the projections 71 and the spaces 72 of the roller 34.

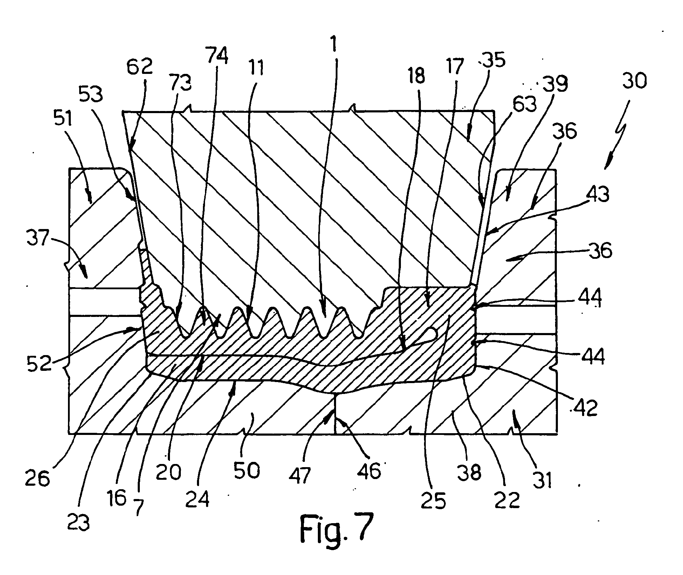

With reference to figure 7, a fourth rolling of the semimachined piece 15 is illustrated, during which the cavities 12 are plastically deformed, by the roller 35, in order to make the V-shaped races 7.

The roller 35 is similar to the roller 34 and is described only where it differs from the roller 34 itself; in particular, the roller 35 presents, in a position corresponding to the corrugated projections 71 and the spaces 72, an alternating plurality of trapezoidally shaped teeth 73 and V-shaped spaces 74.

Consequently, the action of the roller 35 plastically deforms the cavities 12 in order to define the V-shaped races 7.

On examining the features of the method according to the present invention the advantages that it allows to obtain are evident.

In particular, the method according to the present invention uses the material in an optimal manner, avoiding wastage and, at the same time, making it possible to obtain the V-shaped races 7 with a high surface precision so as to reduce wear of the drive belt.

Moreover, thanks to the fact that the pulley 1 is obtained by folding the flange 17 onto the body 16 of the semimachined piece 15, it is possible to obtain the consistent difference in radial dimensions between the projection 8 and the bottom of the races 7 by rolling, that is by plastic deformation machining using compression; in other words, thanks to such innovative solution the difference in radial dimensions between portions of the same piece no longer constitute a limit to an application of the rolling machining.

It is clear that modifications and variations to the subject method of the invention can be effected without leaving the scope of protection defined by the claims.

## Claims

1. A method for the construction of a pulley (1) for automotive purposes equipped with a plurality of peripheral V-shaped races (7) and having an axis (A), comprising the steps of:
- constructing a semimachined piece (15) including a tubular main portion (16), and at least one external annular end first flange (17) folded towards said main portion (16); and
- plastically deforming said first flange (17) to bring a first its peripheral surface (18) into contact with an external surface (20) of said main portion (16) and to make said races (7) on a second peripheral surface (21) of said first flange (17) itself;
**characterized in that** said step of plastic deforming is carried out by a unit (30) which includes a tool (31) for blocking and moving said semimachined piece (15);
said tool (31) including a pair of members (36, 37) which press, from axially opposing parts, said first flange (17) and said main portion (16);
said members (36, 37) further presenting respective surfaces (46, 47) of axial end, which are fitted inside said semimachined piece (15) and are pressed together;
a first said member (36) being coaxially arranged to said semimachined piece (15) and comprising:
- an axial portion (38), which is partially fitted, through a first aperture (22), inside said semimachined piece (15); and
- a second flange (39) extending cantilevered from said portion (38) and adapted to exert a compressive action on said first flange (17);
said second flange (39) presenting a first length (42) having a radial profile and extending from said portion (38) and a second end length (43) having an inclined profile on the opposite side to the said semimachined piece (15);
said first length (42) presenting a pair of teeth (44) axially protruding towards said first flange (17) and engaged, in blocking conditions, on said first flange (17) in order to hold it in a desired position;
a second said member (37) being coaxially arranged inside said semimachined piece (15), and comprising:
- an axial portion (50), which is partially fitted, through a second aperture (23), into said semimachined piece (15); and
- a third flange (51) extending cantilevered from said axial portion (50) and adapted to exert a pressure onto said main portion (16).

2. A method according to claim 1, **characterised in that** said first flange (17), during said step of plastically deforming and before being brought into contact with said main portion (16), is deformed to assume, at least in part, a configuration parallel to said main portion (16).

3. A method according to any of previous claims, **characterised in that** said first flange (17), during said step of plastically deforming, is deformed in order to obtain, on said second peripheral surface (21), first a plurality of corrugated cavities (12) and subsequently said V-shaped races (7).

4. A method according to any of the previous claims for the construction of a pulley (1) having said peripheral V-shaped races (7) and being further equipped with a peripheral projection (8) defining a seismic mass to reduce the transmission of vibrations outside said pulley (1), **characterised in that** said second peripheral surface (21), during said step of plastic deforming, is deformed so as to include at least one area protruding from said races (7) towards the outside of said first flange (17).

5. A method according to any of the previous claims, **characterised in that** said step of plastic deforming occurs by rolling of said first flange (17) by said unit (30).

## Patentansprüche

1. Verfahren zum Herstellen einer Riemenscheibe (1) für Kraftfahrzeuge mit einer Mehrzahl von peripheren V-förmigen Nuten (7), die eine Achse (A) aufweist, umfassend folgende Schritte:
- Bauen eines Halbzeug-Teils (15), umfassend einen rohrförmigen Hauptabschnitt (16), und mindestens einen ersten Flansch (17) am äußeren, ringförmigen Ende, der zu dem Hauptabschnitt (16) gefalzt ist; und
- plastisches Verformen des ersten Flansches (17), um zunächst seine Umfangsfläche (18) in Kontakt mit einer Außenfläche (20) des Hauptabschnitts (16) zu bringen und die Nuten (7) auf einer zweiten Umfangsfläche (21) des ersten Flansches (17) selbst zu erstellen;
**dadurch gekennzeichnet, dass** der Schritt des plastischen Verformens von einer Einheit (30) ausgeführt wird, die ein Werkzeug (31) zum Blockieren und Bewegen des Halbzeug-Teils (15) umfasst;
wobei das Werkzeug (31) ein Paar Elemente (36, 37) umfasst, die von axial gegenüberliegenden Teilen den ersten Flansch (17) und den Hauptabschnitt (16) drücken;
wobei die Elemente (36, 37) überdies jeweilige Flächen (46, 47) eines axialen Endes darstellen, die im Inneren des Halbzeug-Teils (15) angebracht und zusammengedrückt werden;
wobei das erste Element (36) koaxial an dem Halbzeug-Teil (15) angeordnet ist und umfasst:
- einen axialen Abschnitt (38), der durch eine erste Öffnung (22) im Inneren des Halbzeug-Teils (15) teilweise angebracht ist; und
- einen zweiten Flansch (39), der sich freitragend von dem Abschnitt (38) erstreckt und angepasst ist, eine Presswirkung auf den ersten Flansch (17) auszuüben;
wobei der zweite Flansch (39) eine erste Länge (42) darstellt, die ein radiales Profil aufweist und sich von dem Abschnitt (38) erstreckt, und eine zweite Endlänge (43), die ein geneigtes Profil an der gegenüberliegenden Seite zu dem Halbzeug-Teil (15) aufweist;
wobei die erste Länge (42) ein Paar Zähne (44) darstellt, die axial zu dem ersten Flansch (17) hervorstehen und in verkeilten Zuständen auf dem ersten Flansch (17) in Eingriff sind, um ihn in einer gewünschten Position zu halten;
wobei ein zweites Element (37) koaxial im Inneren des Halbzeug-Teils (15) angeordnet ist und umfasst:
- einen axialen Abschnitt (50), der durch eine zweite Öffnung (23) teilweise in dem Halbzeug-Teil (15) angebracht ist; und
- einen dritten Flansch (51), der sich freitragend von dem axialen Abschnitt (50) erstreckt und angepasst ist, einen Druck auf den Hauptabschnitt (16) auszuüben.

2. Verfahren nach Anspruch 1, **dadurch gekennzeichnet, dass** der erste Flansch (17) während dem Schritt des plastischen Verformens und bevor er in Kontakt mit dem Hauptabschnitt (16) gebracht wird, verformt wird, um mindestens teilweise eine Ausgestaltung parallel zu dem Hauptabschnitt (16) anzunehmen.

3. Verfahren nach einem der vorhergehenden Ansprüche, **dadurch gekennzeichnet, dass** der erste Flansch (17) während dem Schritt des plastischen Verformens verformt wird, um an der zweiten Umfangsfläche (21) zunächst eine Mehrzahl von mit Riefen versehenen Hohlräumen (12) und nachfolgend die V-förmigen Nuten (7) zu erhalten.

4. Verfahren nach einem der vorhergehenden Ansprüche zum Herstellen einer Riemenscheibe (1), die die peripheren V-förmigen Nuten (7) aufweist und überdies mit einem peripheren Vorsprung (8) versehen ist, der eine seismische Masse bestimmt, um die Übertragung von Vibrationen außerhalb der Riemenscheibe (1) zu vermindern, **dadurch gekennzeichnet, dass** die zweite periphere Fläche (21) während dem Schritt des plastischen Verformens verformt wird, so dass mindestens ein Bereich umfasst ist, der von den Nuten (7) zur Außenseite des ersten Flansches (17) hervorsteht.

5. Verfahren nach einem der vorhergehenden Ansprüche, **dadurch gekennzeichnet, dass** das plastische Verformen durch Rollen des ersten Flansches (17) durch die Einheit (30) auftritt.

## Revendications

1. Procédé pour la construction d'une poulie (1) pour véhicules automobiles, dotée d'une pluralité de rainures en forme de V (7) et ayant un axe (A), comprenant les étapes consistant à :
- construire une pièce semi-ouvrée (15) comprenant une partie principale tubulaire (16) et au moins une première bride d'extrémité annulaire extérieure (17) repliée vers ladite partie principale (16) ; et
- déformer plastiquement ladite première bride (17) pour amener une première surface périphérique de celle-ci (18) en contact avec une surface extérieure (20) de ladite partie principale (16) et pour réaliser des rainures (7) sur une seconde surface périphérique (21) de ladite première bride (17) elle-même ;
**caractérisé en ce que** ladite étape de déformation plastique est réalisée par une unité (30) qui comprend un outil (31) pour bloquer et déplacer ladite pièce semi-ouvrée (15) ;
ledit outil (31) comprenant une paire d'éléments (36, 37), qui compriment, depuis des parties opposées axialement, ladite première bride (17) et ladite partie principale (16) ;
lesdits éléments (36, 37) présentant en outre des surfaces respectives (46, 47) d'extrémité axiale, qui sont adaptées à l'intérieur de ladite pièce semi-ouvrée (15) et sont comprimées ensemble ;
un premier desdits éléments (36) étant disposé de manière coaxiale par rapport à ladite pièce semi-ouvrée (15) et comprenant :
- une partie axiale (38) qui est partiellement adaptée, par le biais d'une première ouverture (22), à l'intérieur de ladite pièce semi-ouvrée (15) ; et
- une seconde bride (39) s'étendant en porte-à-faux par rapport à ladite partie (38) et apte à exercer une action de compression sur ladite première bride (17) ;
ladite seconde bride (39) présentant une première longueur (42) ayant un profil radial et s'étendant depuis ladite partie (38) et une seconde longueur d'extrémité (43) ayant un profil incliné sur le côté opposé à ladite pièce semi-ouvrée (15) ;
ladite première longueur (42) présentant une paire de dents (44) saillant de manière axiale vers ladite première bride (17) et mise en prise, en conditions de blocage, sur ladite première bride (17) afin de la maintenir dans une position souhaitée ;
un second desdits éléments (37) étant disposé de manière coaxiale à l'intérieur de ladite pièce semi-ouvrée (15) et comprenant :
- une partie axiale (50) qui est partiellement adaptée, à travers une seconde ouverture (23), dans ladite pièce semi-ouvrée (15) ; et
- une troisième bride (51) s'étendant en porte-à-faux par rapport à ladite partie axiale (50) et apte à exercer une pression sur ladite partie principale (16).

2. Procédé selon la revendication 1, **caractérisé en ce que** ladite première bride (17), pendant ladite étape de déformation plastique et avant d'être mise en contact avec ladite partie principale (16), est déformée pour prendre, au moins en partie, une configuration parallèle à ladite partie principale (16).

3. Procédé selon l'une quelconque des revendications précédentes, **caractérisé en ce que** ladite première bride (17), pendant ladite étape de déformation plastique, est déformée afin d'obtenir, sur ladite seconde surface périphérique (21), d'abord une pluralité de cavités ondulées (12) et ensuite lesdites rainures en forme de V (7).

4. Procédé selon l'une quelconque des revendications précédentes pour la construction d'une poulie (1), ayant lesdites rainures en forme de V périphériques (7), et étant en outre dotée d'une projection périphérique (8), définissant une masse sismique, pour réduire la transmission de vibrations en dehors de ladite poulie (1), **caractérisé en ce que** ladite seconde surface périphérique (21), pendant ladite étape de déformation plastique, est déformée, de façon à inclure au moins une zone saillant desdites rainures (7) vers l'extérieur de ladite première bride (17).

5. Procédé selon l'une quelconque des revendications précédentes, **caractérisé en ce que** ladite étape de déformation plastique survient par un laminage de ladite première bride (17) par ladite unité (30).
